# EUROPEAN PATENT SPECIFICATION

(11) **EP 4 718 940 B1**
(45) Date of publication and mention of the grant of the patent: **28.10.2026**
(21) Application number: 24202867.8
(22) Date of filing: 26.09.2024
(51) Int. Cl.: H04W 84/06, H04L 61/00, H04W 8/26, H04W 36/12, H04W 40/02, H04W 40/22

(54) **DEVICE AND METHOD FOR PROVIDING COMMUNICATION FOR A MOBILE TERMINAL VIA AT LEAST ONE SATELLITE**
VORRICHTUNG UND VERFAHREN ZUR BEREITSTELLUNG VON KOMMUNIKATION FÜR EIN MOBILES ENDGERÄT ÜBER MINDESTENS EINEN SATELLITEN
DISPOSITIF ET PROCÉDÉ DE COMMUNICATION POUR UN TERMINAL MOBILE PAR L'INTERMÉDIAIRE D'AU MOINS UN SATELLITE

(43) Date of publication of application: 01.04.2026
(73) Proprietor: NTT DOCOMO, INC., Tokyo 100-6150 (JP)
(72) Inventor: MUTIKAINEN, Jari, 80687 Munich (DE); BHATTACHARJEE, Sushmit, 80687 Munich (DE); SAMA, Malla Reddy, 80687 Munich (DE); MINOKUCHI, Atsushi, Tokyo, 100-6150 (JP)
(74) Representative: Viering, Jentschura & Partner mbB Patent- und Rechtsanwälte

(56) References cited:
- CN-A- 116 866 940
- US-A1- 20250 023 633
- "3rd Generation Partnership Project; Technical Specification Group Services and System Aspects; Study on 5G System with Satellite Backhaul (Release 18)", no. V0.4.0, 7 September 2022 (2022-09-07), pages 1 - 40, XP052210704, Retrieved from the Internet <URL:https://ftp.3gpp.org/Specs/archive/23_series/23.700-27/23700-27-040.zip draft_23700-27-040_rm.docx> [retrieved on 20220907]

## Description

The present disclosure relates to devices and methods for providing communication for a mobile terminal via at least one satellite.

A mobile communication network may use regenerative-based satellite access. This means that a satellite has an onboard base station and can thus act as a serving base station for a radio cell, which is for example remotely located from other, ground-based, base stations of the mobile communication network. It is also possible that multiple satellites providing base stations in that manner are connected via satellite links, such that a satellite constellation of more than one satellite may operate multiple radio cells of a mobile communication network. A special feature in such a satellite-based communication scenario (i.e. where one or more satellites act as base station(s)) is local (onboard) routing, where traffic between mobile terminals served by one or more satellites is routed with a satellite or a satellite constellation without transiting via a ground segment, i.e. a ground-based part of the mobile communication network. Efficient approaches to provide and use this feature are desirable.

The publication "3rd Generation Partnership Project; Technical Specification Group Services and System Aspects; Study on 5G System with Satellite Backhaul (Release 18)", 3GPP STANDARD; TECHNICAL REPORT; 3GPP TR 23.700-27, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.4.0 7 September 2022, pages 1-40, discloses that a session management function is configured with a mapping relationship between DNAI (Data Network Access Identifier) and GEO satellite ID and uses this information to determine mobile terminal traffic which can be locally routed to the GEO satellite.

The publication CN 116 866 940 A describes a satellite communication method in which a session management network element obtains an identifier list. The identifier list includes identification information of one or more terminal devices that access a satellite in a satellite backhaul manner. The session management network element configures a forwarding rule for a user plane network element on the satellite. The forwarding rule is used to offload, to an access network device corresponding to the terminal device, a data packet whose destination address is included in an address of the terminal device corresponding to the identifier list. Based on the foregoing solution, a terminal device that supports local switching in the satellite can perform communication through local switching in the satellite, so that a delay can be reduced and user experience can be improved.

According to one embodiment, a method for providing communication for a mobile terminal via at least one satellite according to claim 1 is provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a mobile radio communication system according to an embodiment.
- Figure 2: illustrates a scenario where the functionality of one or more base stations is provided by one or more satellites.
- Figure 3: shows a flow diagram illustrating a process for setting up a PDU (Packet Date Unit) session in a scenario as illustrated in figure 2.
- Figure 4: shows a flow diagram illustrating a method for providing communication for a mobile terminal via at least one satellite according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

According to further embodiments, a computer program and a computer readable medium comprising instructions, which, when executed by a computer, make the computer perform the method of any one of the above Examples are provided.

In the following, various examples will be described in more detail.

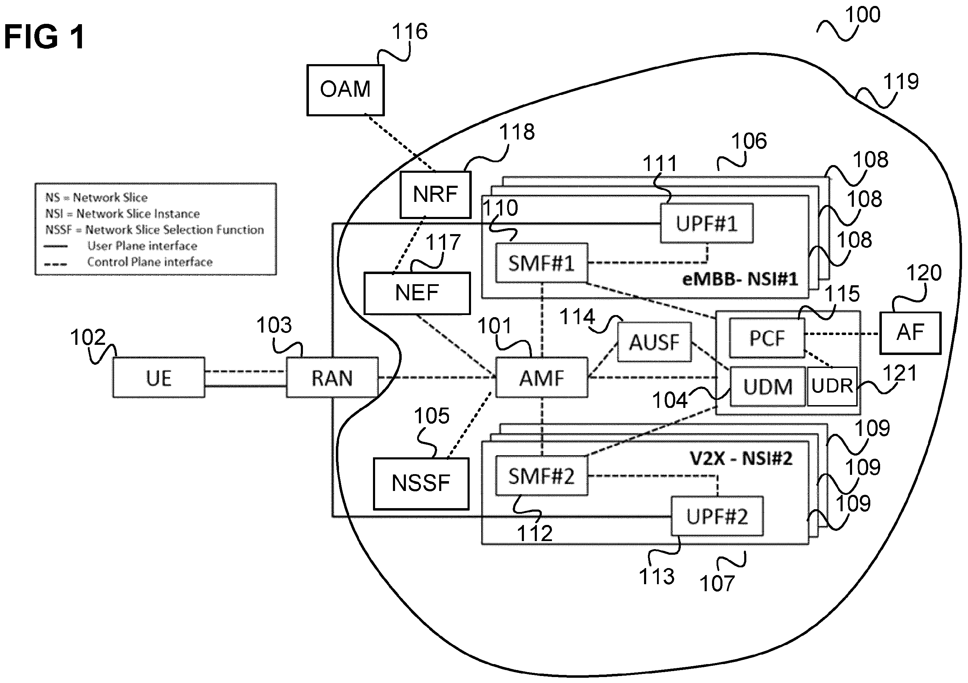

Figure 1 shows a mobile radio communication system 100, for example configured according to 5G (Fifth Generation) as specified by 3GPP (Third Generation Partnership Project).

The mobile radio communication system 100 includes a mobile radio terminal device 102 such as a UE (user equipment), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or another mobile radio communication standard (e.g. non-3GPP accesses like Wi-Fi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 119 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository) 121. The core network 119 further includes an AUSF (Authentication Server Function) 114, a PCF (Policy Control Function) 115 and an AF (application function) 120.

The core network 119 may have multiple core network slices 106, 107 and for each core network slice 106, 107, the operator (also referred to MNO for Mobile Network Operator) may create multiple core network slice instances 108, 109. For example, the core network 119 includes a first core network slice 106 with three core network slice instances (C-NSIs) 108 for providing Enhanced Mobile Broadband (eMBB) and a second core network slice 107 with three core network slice instances (NSIs) 109 for providing Vehicle-to-Everything (V2X).

The Network Slice Selection Assistance Information (NSSAI) represents a set of parameters used to identify and describe a (core) network slice. It includes two key elements:
- Slice Differentiator (SD): it is a globally unique identifier that distinguishes between different network slices within a 5G network. The SD is used to ensure that the UE selects the correct slice during communication.
- Slice Service Type (SST): it indicates the specific service or application type associated with a network slice. The SST provides high-level information about the characteristics and requirements of a slice, such as low latency, high bandwidth, or ultra-reliable communication.

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

The RAN 103 and the core network 119 form the network side of the mobile radio communication system, or, in other words, form the mobile radio communication network. The mobile radio communication network and the mobile terminals accessing the mobile radio communication network form, together, the mobile radio communication system.

Like the core network 119, the RAN 103 may also be sliced, i.e. include multiple RAN slices. A RAN slice and a core network slice 106, 107 may be grouped to form a network slice. In the following, "network slice" (or just "slice") generally refers to a core network slice but may also include a RAN slice or even a transport network slice.

The mobile radio communication system 100 may further include an OAM (Operation, Administration and Maintenance) function (or entity) 116, e.g. implemented by one or more OAM servers which is connected to the RAN 103 and the core network 119 (connections are not shown for simplicity). The OAM 116 may include an MDAS (Management Data Analytics Service). The MDAS may for example provide an analytics report regarding network slice instance load. Various factors may impact the network slice instance load, e.g. number of UEs accessing the network, number of QoS flows, the resource utilizations of different NFs which are related with the network slice instance.

Further, the core network 118 includes an NRF (Network Repository Function). The core network 119 may further include a Network Exposure Function (NEF) 117.

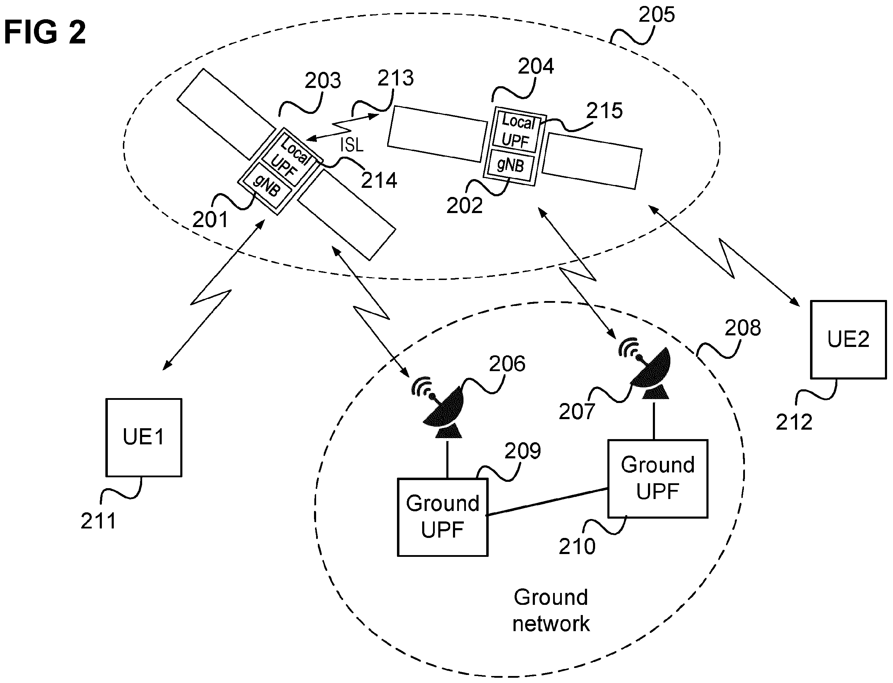

Base stations may be implemented by satellites. This means that communication between UEs under the coverage of one or more serving satellites can be supported, using regenerative-based satellite access (onboard gNBs). Such a scenario is illustrated in figure 2.

Figure 2 illustrates a scenario where the functionality of one or more base stations 201, 202 is provided by one or more satellites 203, 204.

In the example of figure 1, a first satellite 203 provides a first base station (gNB) 201 and a second satellite 204 provides a second base station 202. The two satellites 203, 204 form a satellite constellation 205 (which may have one or more satellites).

Each satellite 203, 204 is connected via a respective satellite antenna 206, 207 to a ground network 208 which includes a core network of the mobile communication network to the RAN of which the base stations 201, 202 belong.

The ground network 208 in particular includes a ground UPF 209, 210 for each satellite 206, 207 (which may also be the same ground UPF for each satellite 206, 207).

In the example of figure 2, the first base station 201 serves a first UE 211 and the second base station 202 serves a second UE 212, i.e. the first base station 201 operates a radio cell in which the first UE 211 is located and the second base station 202 operates a radio cell in which the second UE 212 is located. In other words, the first satellite 206 is the serving satellite for the first UE 211 and the second satellite 207 is the serving satellite for the second UE 212.

For communication between UEs 211, 212 served by satellite, i.e. communication (e.g. call) between two UEs 211, 212 via at least one satellite (i.e. at least one of them being served by a satellite as base station), a ground UPF 209, 210 is selected by the respective SMF 110, 112 and acts as a PDU session anchor (PSA).

When the first UE 211 and the second UE 212 are communicating, e.g. the first UE 211 sends data to the second UE 212, the data is transmitted from the first UE 211 to the first satellite 203, can then be sent to the ground network 208, from there to the second satellite 204 and from there to the second UE 212. This is referred to as satellite-based communication via the ground segment.

If, however, the two satellites 203, 204 can communicate via an inter-satellite link (ISL) 213 or if the same satellite serves both UEs 211, 212 delivery delay of data (i.e. user plane traffic) can be reduced by routing the data locally within the satellite constellation 205 (possibly within the same satellite if it is serving both UEs 211, 212). This is denoted as "local (onboard) routing (of traffic)" or "UE-SAT-UE communication", "local media routing" or "optimized routing of traffic" and may for example be of interest for delay-sensitive services. In other words, UE-Satellite(SAT)-UE communication refers to a communication between UEs under the coverage of one or more serving satellites, using satellite access without the user traffic transiting through the ground segment.

For the UE-SAT-UE communication, the SMF 110, 112 inserts an onboard (i.e. on-satellite) "local" UPF 214, 215 (acting as local PSA or "L-PSA") during call setup procedures. It should be noted that "inserting" a local UPF 214, 215 refers to a scenario where a single PDU session has a ground UPF and the local UPF is inserted between the RAN and the ground UPF. More generally, the SMF 110, 112 "selects" a local UPF 214, 215 or "assigns" a local UPF 214, 215 (to a PDU session). The "selection" of a satellite's local UPF can mean that the SMF triggers that a local UPF in the satellite is set up.

When a UE 211, 212 requests establishment of a PDU session, the SMF 112 (to which the AMF 101 forwards the request) needs to select an appropriate User Plane Function (UPF). This selection is based on various factors such as load, geographic location, and the type of PDU session. In a scenario like illustrated in figure 2, an in case that UE-SAT-UE communication (i.e. local routing) should be supported, the SMF 112 should select the respective local UPF 214, 215. According to various embodiments, an approach is provided to allow the SMF 112 to find the location of the respective local UPF 214, 215, i.e., in other words, to allow an SMF to find (e.g. identify), for a UE served by a satellite (i.e. for which a satellite acts a serving base station), the satellite's local UPF (or where to insert an UPF as satellite's local UPF).

According to various embodiments, this is achieved by introducing a satellite policy that contains a mapping (i.e. information about an association) between satellite ID and target DNAI (Data Network Access Identifier).

The procedures for UPF selection based on target DNAI are defined in existing 3GPP specifications. According to one embodiment, this includes that the SMF 112 checks a list (or data base) of (available) UPFs for a UPF which fulfils the requirements of the target DNAI. The target DNAI that is associated with the UE's serving satellite is for example set in a manner that it (alone) fulfils the target DNAI's requirements, e.g. the target DNAI requires the UPF to cover a geographic region that is covered by the serving satellite and thus the serving satellite's local UPF.]

So, once the SMF 112 knows the target DNAI, the SMF 112 can assign the local UPF as per existing procedures.

According to one embodiment, the mapping between satellite ID and target DNAI is for example provided by the PCF 115: the PCF 115 provides a list of {Satellite ID - DNAI} pairs to the SMF 112, e.g. as part of PCC (Policy and Charging control) rules. The PCF 115 obtains the {Satellite ID - DNAI} pairs for example from the UDR 121, where there have for example been stored by the AF 120 (via the NEF 117).

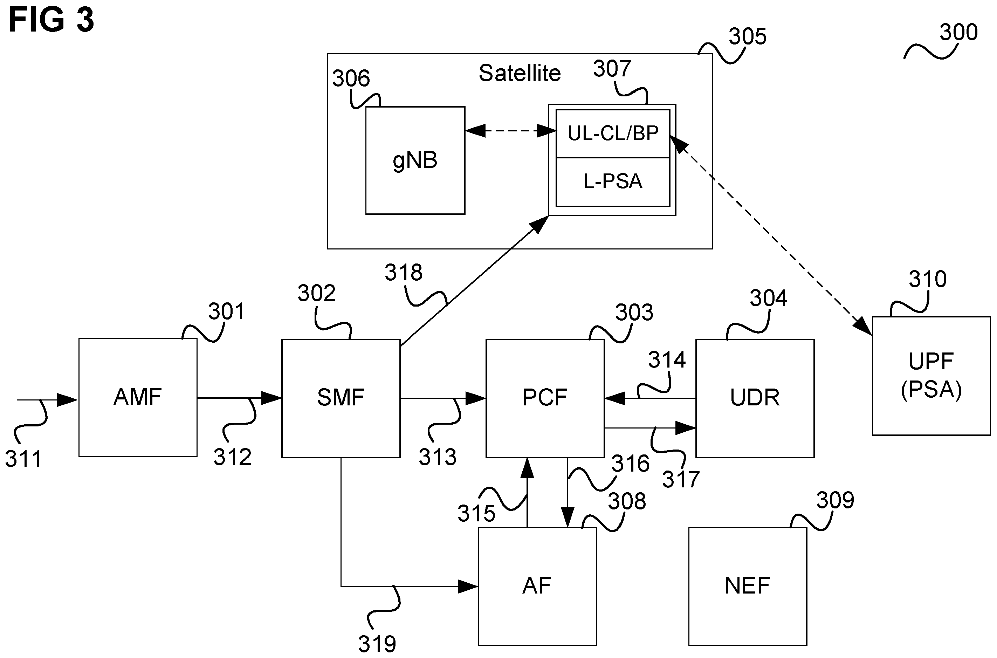

Figure 3 shows a flow diagram 300 illustrating a process for setting up a PDU session in a scenario as illustrated in figure 2.

An AMF 301, an SMF 302, a PCF 303, a UDR 304, a satellite 305, an AF 308, an NEF and a ground UPF 310 are involved in the flow. The satellite 306 implements a gNB 306 and a local UPF 307 (acting as L-PSA and e.g. as UL-CL (Uplink Classifier) and/or BP (multi-homing branching point)).

As mentioned above, it is assumed that, before the actual PDU session establishment happens, the AF 308 provides a satellity policy to the NEF 309. The NEF 309 stores the policy in a repository (the UDR in the present example). The satellite policy may for example define conditions under which a PDU Session (to be established) is considered to be applicable for local media routing, i.e. under which conditions UE-SAT-UE communication should be supported for it. These conditions may for example be stored per DNN (data network name), S-NSSAI and Satellite Constellation ID (i.e. per group of satellites or also per satellite).

The satellite policy further contains the mapping between (target) DNAI and satellite ID (e.g. for each satellite constellation).

For example, the PDU Session must be requested from the given SUPI, must be for the given DNN and S-NSSAI, and the PDU Session must be initiated from a Satellite ID (i.e. from a UE having a serving satellite with that satellite ID) that belongs to the given Satellite Constellation ID. When these conditions are met, the PCF 303 applies the satellite policy for the PDU Session for support of UE-SAT-UE communication and notifies the AF 308 using the notification address in the satellite policy for the PDU session establishment (see 314 and 315 in the following description of the PDU session establishment).

In 311, the AMF 301 receives an NGAP (Next Generation Application Protocol) request with an NAS (non-access stratum) request for UE Requested PDU Session Establishment for a UE. The AMF 301 knows the UE's serving satellite's ID and its satellite constellation ID based on the UE's associated RAN node ID.

In 312, the AMF 301 sends an Nsmf_PDUSession_CreateSMContext request to the SMF 302. The AMF 301 provides the Satellite ID and Constellation ID to the SMF 302.

In 313, the SMF provides the Satellite ID and the Satellite Constellation ID to the PCF 303 with a Npcf_SMPolicyControl_Create Request.

In 314 the PCF 303 reads the Satellite policy from the UDR 310, using the session attributes as a key (SUPI, DNN/S-NSSAI, Satellite Constellation ID). In is assumed that the conditions to support UE-SAT-UE communication for the requested PDU session are met.

In 315, the PCF 303 notifies the AF 308 about establishment of a PDU Session which the AF 308 acknowledges in 316.

In 317, the PCF 303 creates or updates the PCC rules with the SMF 302 by means of a 7. Npcf_SMPolicyControl_Create response or Npcf_SMPolicyControl_UpdateNotify response. The PCC rules contain the list of {DNAI - Satellite ID} pairs for the PDU Session. The PCC rules may contain an AF address for an UP (user plane) path change event (as per 3GPP Rel-18).

In 318, based on the list of {DNAI-Satellite ID} pairs in the PCC rule, the SMF 302 selects the target DNAI based on the UE's serving satellite's ID.

Once the SMF 302 knows the target DNAI, the SMF 302 can use target DNAI to select the location of the local UPF (in particular the L-PSA) 307 for the PDU Session, e.g. according to 3GPP Rel-18.

In 319, the SMF 302 may notify the AF 308 about the insertion of the L-PSA (Event ID: UP path change, target DNAI, UE IP address, etc.). Since the AF knows the mapping of {DNAI - Satellite ID}, the AF 308 can determine the Satellite ID to which the L-UPF was assigned (assuming the same DNAI cannot be used in more than one Satellite Constellation).

The establishment of both PDU sessions (the one for the first UE 211 as well as that the one for the second UE 212) follow the above steps. If both these PDU Sessions that are involved, e.g. in an IMS (IP (Internet Protocol) Multimedia Subsystem) voice call to be established between the two UEs 211, 212, have the local UPF 214, 215 inserted, UE-SAT-UE communication, i.e. satellite-based communication with ("optimized") local routing of user-plane traffic onboard satellite(s) can take place.

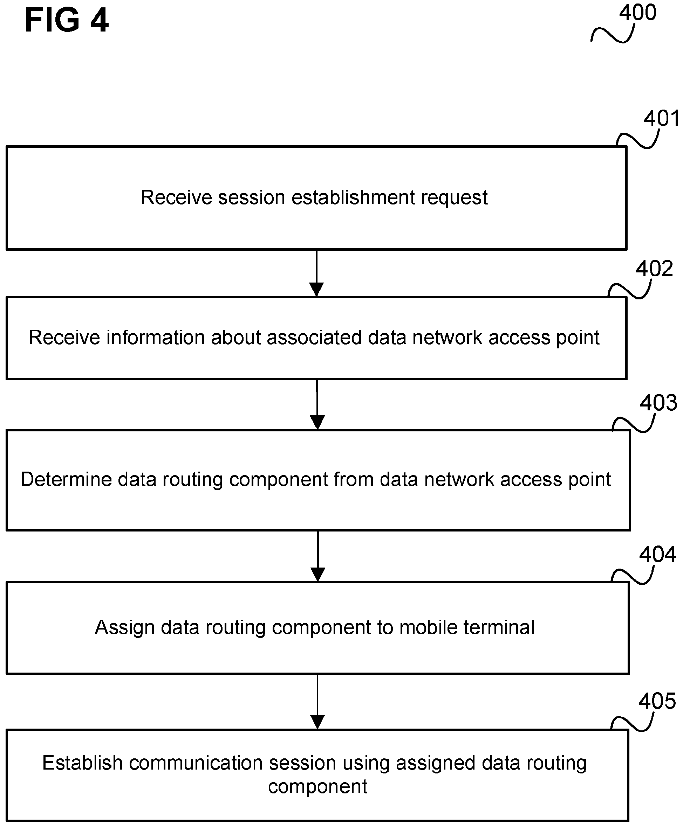

In summary, according to various embodiments, a method is provided as illustrated in figure 4.

Figure 4 shows a flow diagram 400 illustrating a method for providing communication for a mobile terminal via at least one satellite.

In 401, a request is received to establish a communication session (e.g. a PDU session) for a mobile terminal which is served by a serving satellite (i.e. a satellite acting as serving base station of the mobile terminal). The communication session should be established via at least one satellite.

In 402, information about which identifier of an access point to a data network is associated with an identification of the serving satellite is received (e.g. via the control plane). The identifier specifies which access point to use for the data network. It is for example a DNAI (data network access identifier).

In 403, a data routing component implemented in the serving satellite (i.e. an onboard UPF) is determined (i.e. identified) from the received association.

In 404, the determined data routing component is assigned to the mobile terminal. This may happen implicitly by assigning the determined data routing component to the communication session to be established for the mobile terminal. However, the assignment may also happen explicitly, i.e. an information that the determined data routing component is assigned to the mobile terminal may be generated and stored).

In 405, the communication session for the mobile terminal is established using the assigned data routing component.

According to various embodiments, in other words, an SMF is informed about which data network access point corresponds to a satellite identification. This allows it to determine the correct local UPF.

The approach of figure 4 allows providing local media routing (i.e. UE-SAT-UE communication) for satellite-based communication between mobile terminals, e.g. connections such as IMS audio or video calls. For example, an SMF is enabled to select a proper local UPF to allow local media routing for such a communication. From the SMF point of view, once the SMF knows the target DNAI, it can use existing procedures to select the correct local UPF. According to one embodiment, this is achieved by providing a {Satellite ID - DNAI} mapping from an AF and maintaining it in a repository (e.g. UDR) as well as providing the {Satellite ID - DNAI} mapping in PCC rules to SMF.

The data routing component, e.g. a packet data routing component, is for example a user plane function. A User Plane Function (UPF) is a (core network) component responsible for packet routing and forwarding as well as for example packet inspection, QoS (quality of service) handling, and interconnection of Data Networks (DNs).

According to various embodiments, a method for determining an on-board User Plane control node is provided which applies to a Session Management control node and which includes:
- sending, by an application control node to a network exposure control node, a first control plane message comprising satellite policy information, wherein the satellite policy information includes a Satellite Constellation identifier, a list of satellite identifications of the satellites that belong to the Satellite Constellation, and a list mapping the DNAI and the satellite identifications of the satellites that belong to the Satellite Constellation to each other,
- receiving, by the network exposure control node from the application control node, a first control plane message comprising the satellite policy information,
- sending the satellite policy information by the network exposure control node to the data repository node, storing the satellite policy information in the data repository node (i.e. configuring the satellite policy information in the data repository node),
- receiving, by a policy control node from the data repository node, a first control plane message comprising the satellite policy information related to the session attributes (i.e. DNN, S-NSSAI, and Satellite Constellation identifier) as key,
- sending, by the policy control node to the Session Management control node, a first control plane message comprising, in PCC rules, the list mapping the DNAI and the satellite identifications of the satellites that belong to the Satellite Constellation to each other and
- determining an on-board User Plane control node by
   ∘ selecting a target DNAI based on the matching of the satellite policy information and the current satellite identification of the UE and
   ∘ selecting the local User plane control node (L-PSA) for the PDU Session . based on the target DNAI.#

The User Plane control node, Session Management control node, data repository node, Application control node, Network Exposure control node, Policy control node, local User plane control node may be part of a 5G (fifth generation) or 6G sixth generation core network (i.e. 5GC or 6GC, in particular according to 3GPP). They may for example correspond to UPF, SMF, UDR, AF, NEF, PCF, and local UPF (also denoted as L-PSA UPF) in 5G.

The method of figure 4 may be carried out by a communication system component which may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

Although the invention has been explained in relation to its preferred embodiment(s) as mentioned above, it is to be understood that many other possible modifications and variations can be made without departing from the scope of the present invention, which is defined by the claims.

## Claims

1. A method for providing communication for a mobile terminal (102, 211, 212) via at least one satellite (203, 204, 305), comprising:
Receiving a request to establish a communication session for a mobile terminal (102, 211, 212) which is served by a serving satellite (203, 204, 305);
Receiving, after having received the request for establishment of the communication session, information about which Data Network Access Identifier, DNAI, is associated with an identification of the serving satellite (203, 204, 305) as part of information about a session establishment policy from a policy control function (303) by a session management function (302);
Determining a User Plane Function, UPF, (214, 215, 307) implemented in the serving satellite (203, 204, 305) from the received association;
Assigning the determined UPF (214, 215, 307) to the mobile terminal (102, 211, 212); and
Establishing the communication session for the mobile terminal (102, 211, 212) using the assigned UPF (214, 215, 307).

2. The method of claim 1, comprising receiving the identification of the serving satellite (203, 204, 305).

3. The method of claim 1 or 2, comprising receiving the information about which DNAI is associated with an identification of the serving satellite (203, 204, 305) as part of one or more policy and charging control rules.

4. The method of any one of claims 1 to 3, comprising receiving the information about which DNAI is associated with an identification of the serving satellite (203, 204, 305) in the form of a list of associations of multiple DNAIs with satellite identifications.

5. The method of claim 4, wherein the list of associations is stored in a repository (121, 304).

6. The method of any one of claims 1 to 5, wherein determining the UPF (214, 215, 307) implemented in the serving satellite (203, 204, 305) comprises matching the identification of the serving satellite (203, 204, 305) with the satellite identifications for which the list includes associations with DNAIs.

7. The method of any one of claims 1 to 6, performed by the session management function (302), which is a component of a core network of a mobile communication network for which the serving satellite (203, 204, 305) acts as a base station of a radio access network of the mobile communication network.

8. A session management control component of a mobile communication network, configured to perform the method of any one of claims 1 to 7.

## Patentansprüche

1. Ein Verfahren zum Bereitstellen einer Kommunikation für ein mobiles Endgerät (102, 211, 212) über mindestens einen Satelliten (203, 204, 305), aufweisend:
Empfangen einer Anforderung, eine Kommunikationssitzung für ein mobiles Endgerät (102, 211, 212), das durch einen bedienenden Satelliten (203, 204, 305) versorgt wird, aufzubauen;
Empfangen, nach dem Empfang der Anforderung zum Aufbau der Kommunikationssitzung, von Informationen darüber, welcher Data Network Access Identifier, DNAI, mit einer Kennung des bedienenden Satelliten (203, 204, 305) assoziiert ist, als Teil von Informationen über eine Richtlinie zum Sitzungsaufbau von einer Richtliniensteuerungsfunktion (303) durch eine Sitzungsverwaltungsfunktion (302);
Bestimmen einer User Plane Function, UPF, (214, 215, 307), die in dem bedienenden Satelliten (203, 204, 305) implementiert ist, auf Grundlage der empfangenen Assoziation; Zuordnen der bestimmten UPF (214, 215, 307) zu dem mobilen Endgerät (102, 211, 212); und
Aufbauen der Kommunikationssitzung für das mobile Endgerät (102, 211, 212) unter Verwendung der zugeordneten UPF (214, 215, 307).

2. Das Verfahren nach Anspruch 1, aufweisend das Empfangen der Kennung des bedienenden Satelliten (203, 204, 305).

3. Das Verfahren nach Anspruch 1 oder 2, aufweisend das Empfangen der Informationen darüber, welche DNAI mit einer Kennung des bedienenden Satelliten (203, 204, 305) assoziiert ist, als Teil einer oder mehrerer Richtlinien- und Gebührensteuerungsregeln.

4. Das Verfahren nach einem der Ansprüche 1 bis 3, aufweisend das Empfangen der Informationen darüber, welche DNAI mit einer Kennung des bedienenden Satelliten (203, 204, 305) assoziiert ist, in Form einer Liste von Assoziationen mehrerer DNAls mit Satellitenkennungen.

5. Das Verfahren nach Anspruch 4, wobei die Liste von Assoziationen in einem Speicher (121, 304) abgelegt ist.

6. Das Verfahren nach einem der Ansprüche 1 bis 5, wobei das Bestimmen der in dem bedienenden Satelliten (203, 204, 305) implementierten UPF (214, 215, 307) das Abgleichen der Kennung des bedienenden Satelliten (203, 204, 305) mit den Satellitenkennungen aufweist, für die die Liste Assoziationen mit DNAls enthält.

7. Das Verfahren nach einem der Ansprüche 1 bis 6, durchgeführt durch die Sitzungsverwaltungsfunktion (302), die eine Komponente eines Kernnetzes eines Mobilfunknetzes ist, wobei der bedienende Satellit (203, 204, 305) als Basisstation eines Funkzugangsnetzes des Mobilfunknetzes wirkt.

8. Eine Sitzungsverwaltungssteuerungskomponente eines Mobilfunknetzes, eingerichtet zum Durchführen des Verfahrens nach einem der Ansprüche 1 bis 7.

## Revendications

1. Procédé pour assurer la communication d'un terminal mobile (102, 211, 212) via au moins un satellite (203, 204, 305), comprenant :
la réception d'une demande d'établissement d'une session de communication pour un terminal mobile (102, 211, 212) desservi par un satellite de desserte (203, 204, 305) ;
la réception, après avoir reçu la demande d'établissement de la session de communication, d'informations indiquant quel identifiant d'accès au réseau de données, DNAI, est associé à un identifiant du satellite de desserte (203, 204, 305), dans le cadre d'informations relatives à une politique d'établissement de session provenant d'une fonction de contrôle de politique (303) par une fonction de gestion de session (302) ;
la détermination d'une fonction de plan utilisateur, UPF, (214, 215, 307) mise en œuvre dans le satellite de desserte (203, 204, 305) à partir de l'association reçue ;
l'attribution de l'UPF déterminée (214, 215, 307) au terminal mobile (102, 211, 212) ; et
l'établissement de la session de communication pour le terminal mobile (102, 211, 212) en utilisant l'UPF attribuée (214, 215, 307).

2. Procédé selon la revendication 1, comprenant la réception de l'identification du satellite de desserte (203, 204, 305).

3. Procédé selon la revendication 1 ou 2, comprenant la réception des informations indiquant quel DNAI est associé à une identification du satellite de desserte (203, 204, 305) dans le cadre d'une ou de plusieurs règles de contrôle de politique et de tarification.

4. Procédé selon l'une quelconque des revendications 1 à 3, comprenant la réception des informations indiquant quel DNAI est associé à un identifiant du satellite de desserte (203, 204, 305) sous la forme d'une liste d'associations de plusieurs DNAI avec des identifiants de satellites.

5. Procédé selon la revendication 4, dans lequel la liste d'associations est stockée dans un référentiel (121, 304).

6. Procédé selon l'une quelconque des revendications 1 à 5, dans lequel la détermination de l'UPF (214, 215, 307) mise en œuvre dans le satellite de desserte (203, 204, 305) comprend la mise en correspondance de l'identifiant du satellite de desserte (203, 204, 305) avec les identifiants de satellites pour lesquels la liste inclut des associations avec des DNAI.

7. Procédé selon l'une quelconque des revendications 1 à 6, mis en œuvre par la fonction de gestion de session (302), qui est un composant d'un réseau central d'un réseau de communication mobile pour lequel le satellite de desserte (203, 204, 305) agit en tant que station de base d'un réseau d'accès radio dudit réseau de communication mobile.

8. Composant de contrôle de gestion de session d'un réseau de communication mobile, configuré pour mettre en œuvre le procédé selon l'une quelconque des revendications 1 à 7.
